# EUROPÄISCHE PATENTSCHRIFT

(11) **EP 0 776 430 B1**
(45) Veröffentlichungstag und Bekanntmachung des Hinweises auf die Patenterteilung: **01.03.2000**
(21) Anmeldenummer: 96916168.6
(22) Anmeldetag: 29.05.1996
(51) Int. Cl.: F16F 13/12

(54) **HYDRAULISCH DÄMPFENDES LAGER**
HYDRAULICALLY DAMPING BEARING
SUPPORT D'AMORTISSEMENT HYDRAULIQUE

(30) Priorität: 22.06.1995 DE 19522640
(43) Veröffentlichungstag der Anmeldung: 04.06.1997
(73) Patentinhaber: Metzeler Gimetall AG, D-64744 Breuberg (DE)
(72) Erfinder: PFENNING, Michael, D-56206 Hilgert (DE); MÜLLER, Hans, D-56203 Höhr-Grenzhausen (DE); KAISER, Franz-Josef, D-56424 Bannberscheid (DE)
(74) Vertreter: Preissner, Nicolaus, Dipl.-Ing.
(86) Internationale Anmeldenummer: EP9602305
(87) Internationale Veröffentlichungsnummer: WO9701046

(56) Entgegenhaltungen:
- EP-A- 0 191 703
- EP-A- 0 235 540
- DE-A- 3 414 547
- US-A- 4 889 325
- PATENT ABSTRACTS OF JAPAN vol. 009, no. 303 (M-434), 30.November 1985 & JP,A,60 139939 (BRIDGESTONE KK), 24.Juli 1985,

## Beschreibung

Die Erfindung betrifft ein hydraulisch dämpfendes Lager, insbesondere Motorlager für Kraftfahrzeuge, mit einer flüssigkeitsgefüllten Arbeitskammer, die von einer gummielastischen, ein Lagerkernteil abstützenden Wandung gebildet ist, wobei in der Arbeitskammer ein Panscher angeordnet ist, der mit der gummielastischen Wandung einen Spalt begrenzt.

Ein derartiges hydraulisch dämpfendes Lager ist bekannt. Diese Lager werden insbesondere dort eingesetzt, wo Lasten, beispielsweise der Motor eines Kraftfahrzeuges, getragen werden müssen und gleichzeitig große Bewegungen abgedämpft werden müssen. Insbesondere bei Kraftfahrzeugen ist es wünschenswert, daß das Übertragungsverhalten für akustische Schwingungen in einem weiten Bereich minimal ist. Dieses Übertragungsverhalten für akustische Schwingungen wird durch die dynamische Steifigkeit das Lagers beeinflußt. Hierbei bedeutet eine niedrige Steifigkeit schlechtes Übertragungsverhalten und damit gute akustische Isolation, was sich auf den Fahrkomfort im Fahrzeug positiv auswirkt. Um die dynamische Steifigkeit im höheren Frequenzbereich zu verkleinern ist es bekannt in der Arbeitskammer einen Panscher vorzusehen. Der am Lagerkernteil befestigte Panscher unterteilt die Arbeitskammer in zwei Bereiche, wobei ein Spalt zwischen Panscher und der gummielastischen Wandung verbleibt. Bei hochfrequenten Schwingungen setzt sich die Flüssigkeit im Bereich des Panscherspalts gegen die Volumensteifigkeit der Tragfeder bzw. der gummielastischen Wandung in Bewegung und kann bei einer bestimmten Frequenz in Resonanz kommen. Dies bewirkt eine Verringerung der dynamischen Steifigkeit.

Ausgehend hiervon liegt der Erfindung die Aufgabe zugrunde, ein hydraulisch dämpfendes Lager vorzuschlagen, bei dem die dynamische Steifigkeit abhängig von der Größe der Einfederung des Lagers beeinflußbar ist.

Zur Lösung dieser Aufgabe wird bei einem hydraulisch dämpfenden Lager der eingangs genannten Art vorgeschlagen, daß die gummielastische Wandung zwei gegenüberliegende, mit Neigung zueinander angeordnete Tragstollen aufweist, die zwischen sich das Lagerkernteil aufnehmen, wobei die gummielastische Wandung weiterhin sich gegenüberliegende Seitenwände umfaßt, die an dem Lagerkernteil festgelegt sind und sich unter Belastung nach innen ausbeulen.

Durch die Ausbeulung der gummielastischen Seitenwände bei der Einfederung des Lagers ergeben sich in Abhängigkeit von der Einfederung unterschiedlich große Panscherspalte. Hierbei bewirkt eine kleine Einfederung des Lagers einen relativ großen Panscherspalt und niedrige Panscherresonanz. Bei einer großen Einfederung liegt demgegenüber ein kleiner Panscherspalt und somit eine höhere Resonanzfrequenz vor. Ein wesentlicher Vorteil des erfindungsgemäßen Lagers ist darin zu sehen, daß die vorbeschriebene Abhängigkeit durch die Konturgebung der den Panscherspalt bildenden Teile nahezu beliebig variierbar ist. Somit kann die dynamische Steifigkeit des Lagers den Anforderungen entsprechend variiert werden.

Vorteilhafte Ausgestaltungen der Erfindung sind in den Unteransprüchen aufgeführt.

Vorteilhaft sind die Seitenwände im wesentlichen senkrecht ausgerichtet und an der Unterseite des Lagerkernteils festgelegt. Bei der Einfederung eines derartigen Lagers werden die sich gegenüberliegend angeordneten Seitenwände nach innen ausgebeult und nähern sich somit an.

Vorteilhaft sind die Seitenwände mit geringerer Volumensteifigkeit als die Tragstollen ausgebildet.

Bei einer weiteren Ausgestaltung sind die Tragstollen zwischen einer Stirnseite des Lagerkernteils und einem Flanschteil aufgenommen, das von einer die Arbeitskammer begrenzenden Bodenplatte und/oder Düsenplatte abragt. Hierbei kann das Flanschteil bis in den Bereich der Seitenwände geführt sein und somit diese endseitig abstützen.

Vorteilhaft begrenzt der Panscher mit der gummielastischen Wandung einen umlaufenden Spalt.

Es kann auch vorgesehen werden, daß der Panscher mit der gummielastischen Wandung einen Spalt begrenzt, der in Umfangsrichtung unterschiedliche Größe aufweist.

Vorteilhaft ist die Größe des Spalts abhängig von den Abmessungen des Panschers und/oder der Seitenwände einstellbar.

Hierbei kann in Ausgestaltung der Erfindung vorgesehen sein, daß der Spalt in Umfangsrichtung stellenweise verschlossen ist.

In weiterer Ausgestaltung der Erfindung wird vorgeschlagen, daß der Panscher kappenförmig ausgebildet ist und an der Unterseite des Lagerkernteils festgelegt ist.

Vorteilhaft ist der Panscher aus einem elastischen Material hergestellt.

In weiterer vorteilhafter Ausgestaltung sind die Tragstollen und der Panscher als integriertes Bauteil ausgebildet, wobei in dem Bauteil eine Aufnahme für das Lagerkernteil vorgesehen ist. Vorteilhaft ist hierbei der Panscher an die Unterseite des Lagerkernteils angespritzt.

In weiterer Ausgestaltung kann der Panscher eine nährungsweise X-förmige Querschnittsform mit einem blockförmigen Basisbereich und hiervon gespreizt abragenden Panscherbereichen aufweisen, die eine bogenförmige Außenkontur aufweisen.

In weiterer Ausgestaltung kann der Panscher eine seitliche kanalförmige Aussparung aufweisen, die durch den Panscher und die Seitenwände begrenzte Ober- und Unterkammern miteinander verbindet.

Bei einer weiteren Ausgestaltung der Erfindung ist der Panscher an eine die Arbeitskammer begrenzende Bodenplatte und/oder Düsenplatte angeformt und ragt in die Arbeitskammer ein.

Alternativ kann der Panscher als ein separates Bauteil ausgebildet sein, das an einer die Arbeitskammer begrenzenden Bodenplatte und/ oder Düsenplatte festgelegt ist.

Nachfolgend wird die Erfindung anhand von vorteilhaften Ausführungsbeispielen näher erläutert, die in der Zeichnung in schematischer Weise dargestellt sind. Dabei zeigen:
- Figur 1: einen Vertikalschnitt durch eine erste Ausführungsform des erfindungsgemäßen Lagers,
- Figur 2: einen Schnitt längs der Linie ll-ll in Figur 1,
- Figur 3: eine Draufsicht in Richtung des Pfeiles III gemäß Figur 1,
- Figur 4: einen Vertikalschnitt durch eine weitere Ausführungsform eines erfindungsgemäßen Lagers,
- Figur 5: einen Schnitt längs der Linie V-V gemäß Figur 4,
- Figur 6: eine Ansicht in Richtung des Pfeiles VI gemäß Figur IV,
- Figur 7: einen Vertikalschnitt durch eine weitere Ausführungsform eines erfindungsgemäßen Lagers,
- Figur 8: einen Schnitt längs der Linie VIll-VIII gemäß Figur 7,
- Figur 9: eine Ansicht in Richtung des Pfeiles IX gemäß Figur 7,
- Figur 10: einen Vertikalschnitt durch eine weitere Ausführungsform des erfindungsgemäßen Lagers,
- Figur 11: einen Schnitt längs der Linie Xl-XI gemäß Figur 10, und
- Figur 12: einen Vertikalschnitt durch eine weitere Ausführungsform des erfindungsgemäßen Lagers.

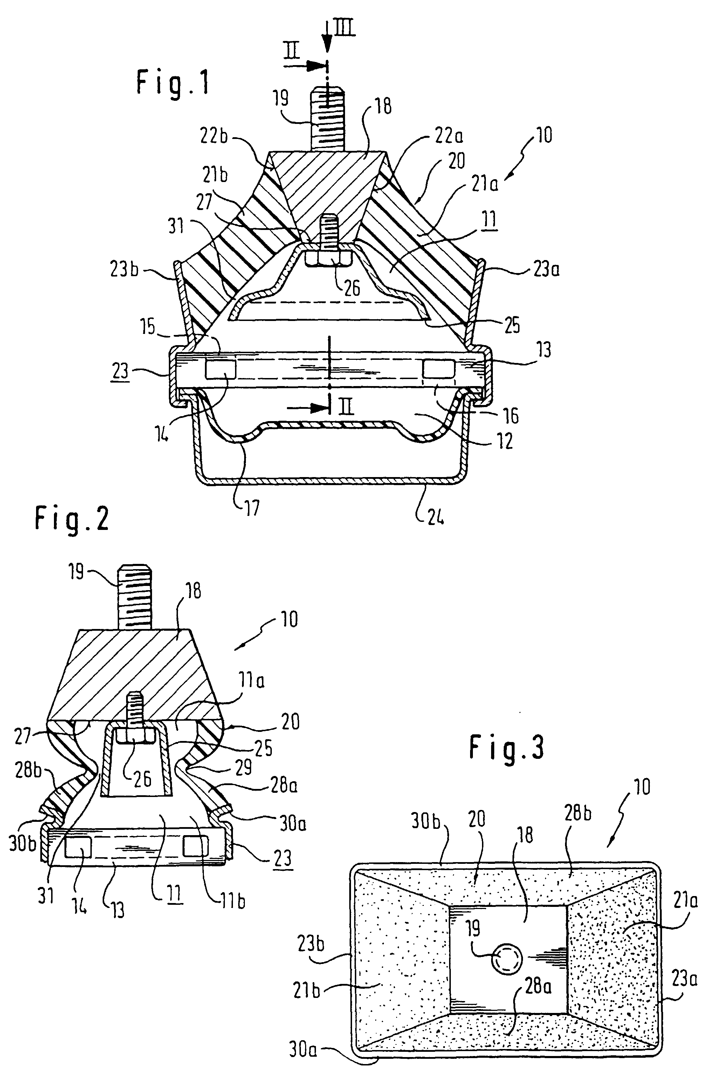

Das in Figur 1 in schematischer Weise dargestellte Lager 10 ist als hydraulisch dämpfendes Zweikammer-Motorlager ausgebildet. Das Lager 10 weist eine flüssigkeitsgefüllte Arbeitskammer 11 auf, die von einer gummielastischen Wandung, die auch als Tragfeder bezeichnet wird, begrenzt ist. Die gummielastische Wandung 20 nimmt ein Lagerkernteil 18 auf, das im Einbauzustand des Lagers 10 den nicht dargestellten Motor aufnimmt. Zur Festlegung des Lagerkernteils 18 an dem Motor ist ein Schraubbolzen 19 vorgesehen. Neben der Arbeitskammer 11 weist das Lager 10 eine Ausgleichskammer 12 auf, die über eine Zwischenplatte 13 von der Arbeitskammer 11 abgetrennt ist. Die Ausgleichskammer 12 wird von einer Kammerwandung 17, die ebenfalls aus gummielastischem Material hergestellt ist, begrenzt. Hierbei ist die gummielastische Wandung 17 der Ausgleichskammer 12 mit geringerer Volumensteifigkeit und somit nachgiebiger als die gummielastische Wandung 20 ausgebildet, die das Lagerkernteil 18 aufnimmt.

In der Zwischenplatte 13 ist ein spiralförmig ausgebildeter Überströmkanal 14 eingebracht, der endseitig mit einer der Arbeitskammer 11 zugeordneten Öffnung 15 und einer der Ausgleichskammer 12 zugeordneten Öffnung 16 versehen ist. Die gummielastische Wandung 17 der Ausgleichskammer 12 ist von einem unteren Gehäusedeckel 24 umgeben. Karosserieseitig erfolgt die Befestigung des Lagers 10 vorzugsweise mittels Schrauben, die am Deckel 24 vorgesehen sind.

Die als Tragfeder dienende gummielastische Wandung 20 weist zwei mit Neigung zueinander angeordnete Tragstollen 21a, 21b auf, die an den Stirnseiten 22a, 22b des Lagerkernteils 18 festgelegt sind. An ihrem gegenüberliegenden Ende werden die Tragstollen 21a, 21b jeweils an einem Flanschteil 23a, 23b abgestützt, das am Außenumfang der Zwischenplatte 13 angeordnet ist. Weiterhin wird die gummielastische Wandung 20 von zwei sich gegenüberliegenden Seitenwänden 28a, 28b aus elastomerem Material gebildet, die zwischen der Unterseite 27 des Lagerkernteils 18 und jeweils einem Randkragen 30a, 30b des Flanschteils 23 festgelegt ist. In unbelastetem Zustand des Lagers 10 sind die Seitenwände 28a, 28b nahezu senkrecht ausgerichtet. Bei Belastung beulen sich die Seitenwände 28a, 28b an einem Knickbereich 29 nach innen ein. Die Seitenwände 28a, 28b sind mit geringerer Volumensteifigkeit und somit nachgiebiger ausgebildet als die Tragstollen 21a, 21b.

Zwischen dem Panscher 25 und der gummielastischen Wandung 20 ist ein in Umfangsrichtung umlaufender Spalt 31, der auch als Panscherspalt bezeichnet wird, vorgesehen. Bei Einleitung hochfrequenter Schwingungen setzt sich die Flüssigkeit im Bereich des Spaltes 31 in Bewegung, was zu einer Erniedrigung der dynamischen Steifigkeit des Lagers 10 führt. Bei dem Lager 10 ist die Größe des Spaltes 31 und damit die Resonanzfrequenz des Panschers 35 von der Größe der Einfederung abhängig. Bei geringer Einfederung ergibt sich ein großer Spalt 31 und damit eine niedrige Panscherresonanz, während eine große Einfederung zu kleinem Panscherspalt 31 und höherer Resonanzfrequenz führt. Durch die sich bei Belastung nach innen ausbeulenden Seitenwände 28a, 28b verändert sich der Spalt 31 im Bereich der Seitenwände 28a, 28b in großem Umfang. Hierbei unterteilt der Spalt 31 die Arbeitskammer 11 in eine Oberkammer 11a und in eine Unterkammer 11b.

Figur 3 zeigt das Lager 10 in einer Draufsicht in Richtung des Pfeiles III gemäß Figur 1. Aus dieser Darstellung ist ersichtlich, wie die beiden sich gegenüberliegenden Tragstollen 21a, 21b das zwischenliegend angeordnete Lagerkernteil 18 abstützen. Weiterhin ist aus Figur 3 ersichtlich, daß die als Tragfeder wirkende gummielastische Wandung 20 eine rechteckförmige Grundform aufweist. Randseitig wird die gummielastische Wandung im Bereich der Tragstollen 21a, 21b durch die Flanschteile 23a, 23b und im Bereich der Seitenwände 28a, 28b durch die Randkrägen 30a, 30b begrenzt.

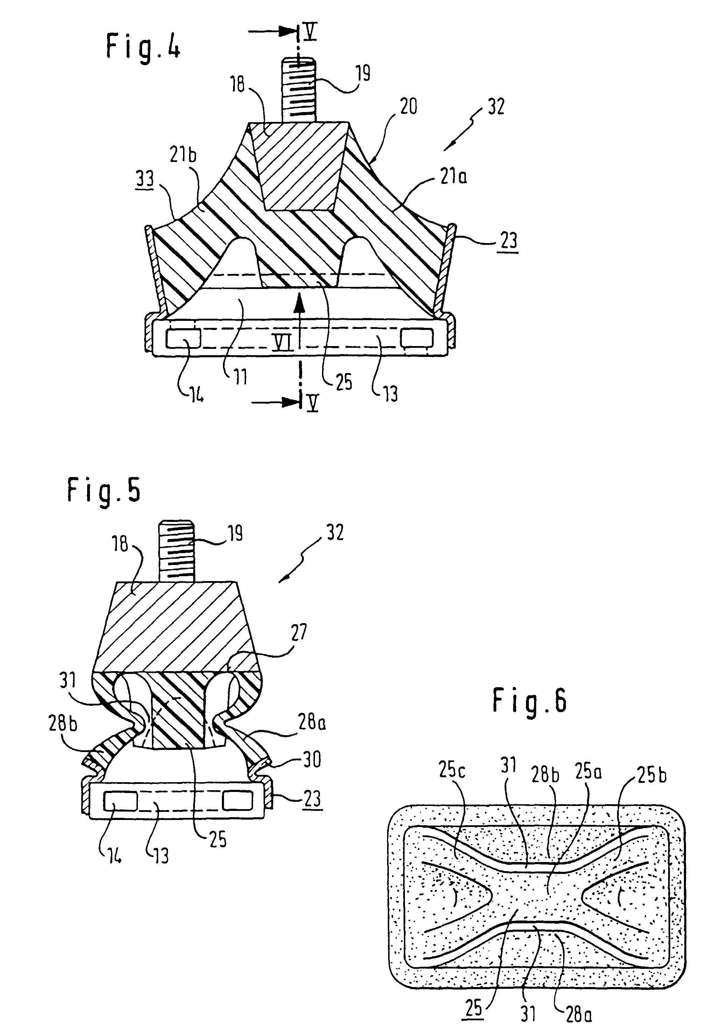

Das in den Figuren 4 bis 6 dargestellte Lager 32 weist einen ähnlichen Aufbau wie das Lager 10 gemäß Figur 1 auf. Zur Beschreibung des Lagers 32 sollen für gleiche oder funktionsgleiche Teile die gleichen Bezugszeichen wie bei dem Lager 10 verwendet werden. Das Lager 32 besitzt eine als Tragfeder ausgebildete gummielastische Wandung 20, die das Lagerkernteil 18 abstützt. Die gummielastische Wandung 20 weist ein integriertes Bauteil 33 auf, an dem die mit Neigung zueinander angeordneten Tragstollen 21a, 21b und der Panscher 25 ausgebildet sind. Hierbei ist der Panscher 25 als in die Arbeitskammer 11 einragender Block ausgebildet. Das integrierte Bauteil 33 stützt sich an dem Flanschteil 23 ab, das am Außenumfang der Zwischenplatte 13 vorgesehen ist. Das Lager 32 ist wie das Lager 10 gemäß Figur 1 ebenfalls als Zweikammer-Motorlager ausgebildet, wobei in Figur 4 auf die Darstellung des unterhalb der Zwischenplatte 13 vorgesehenen Bereichs verzichtet wurde.

Neben dem integrierten Bauteil 33 umfaßt die eleastische Wandung 20 des Lagers 32 zwei gegenüberliegende Seitenwände 28a, 28b, die zwischen der Unterseite 27 des Lagerkernteils 18 und einem Randkragen 30 des Flanschteils 23 festgelegt sind. Die sich bei Einfederung nach innen ausbeulenden Seitenwände 28a, 28b begrenzen mit dem auf die Unterseite 27 aufgespritzten Panscher 25 einen Spalt 31.

Bei dem Lager 32 weist der Panscher 25 eine spezielle Formgebung auf, die insbesondere aus Figur 6 ersichtlich ist, die eine Ansicht in Richtung des Pfeiles VI gemäß Figur 4 zeigt. Bei dem Lager 32 besitzt der Panscher 25 eine nährungsweise X-förmige Querschnittsform mit einem blockförmigen Basisbereich 25a und hiervon gespreizt abragenden Panscherbereichen 25b, 25c, die eine bogenförmige Außenkontur aufweisen. Der Panscher 25 begrenzt mit den Seitenwänden 28a, 28b einen Spalt 31. Ebenso wie beim Lager 10 gemäß den Figuren 1 bis 3 verändert sich die Breite des Spalts 31 in Abhängigkeit von der Einfederung des Lagers.

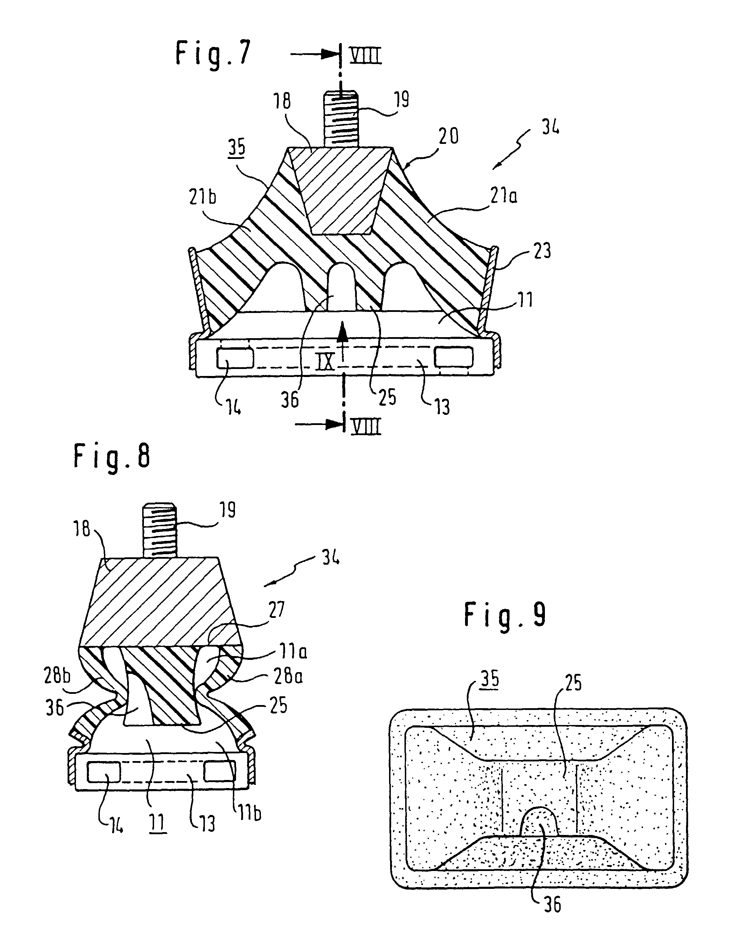

In den Figuren 7 bis 9 ist ein weiteres Lager 34 dargestellt, das ebenfalls als Zweikammer-Motorlager ausgebildet ist, wobei auf die Darstellung der unterhalb der Zwischenplatte 13 liegenden Bauteile verzichtet wurde. Zur Beschreibung des Lagers 34 werden zur Beschreibung von gleichen oder funktionsgleichen Bauteilen die bereits eingeführten Bezugszeichen verwendet. Bei dem Lager 34 weist die als Tragfeder ausgebildete gummielastische Wandung 20 ein integriertes Bauteil 35 auf, an dem die mit Neigung zueinandern angeordneten Tragstollen 21a, 21b und der in die Arbeitskammer 11 ragende Panscher 25 ausgebildet sind. Darüber hinaus umfaßt die gummielastische Wandung 20 zwei Seitenwände 28a, 28b, die sich bei Einfederung nach innen ausbeulen. Der an die Unterseite 27 des Lagerkerns 18 aufgespritzte Panscher 25 weist im Bereich der Seitenwand 28b eine kanalförmige Aussparung 36 auf, die die Oberkammer 11a mit der Unterkammer 11b verbindet. Ansonsten besitzt der Panscher 25 eine Außenkontur der Art, daß bei eingefedertem Lager kein Spalt zwischen den Seitenwänden 28a, 28b vorliegt.

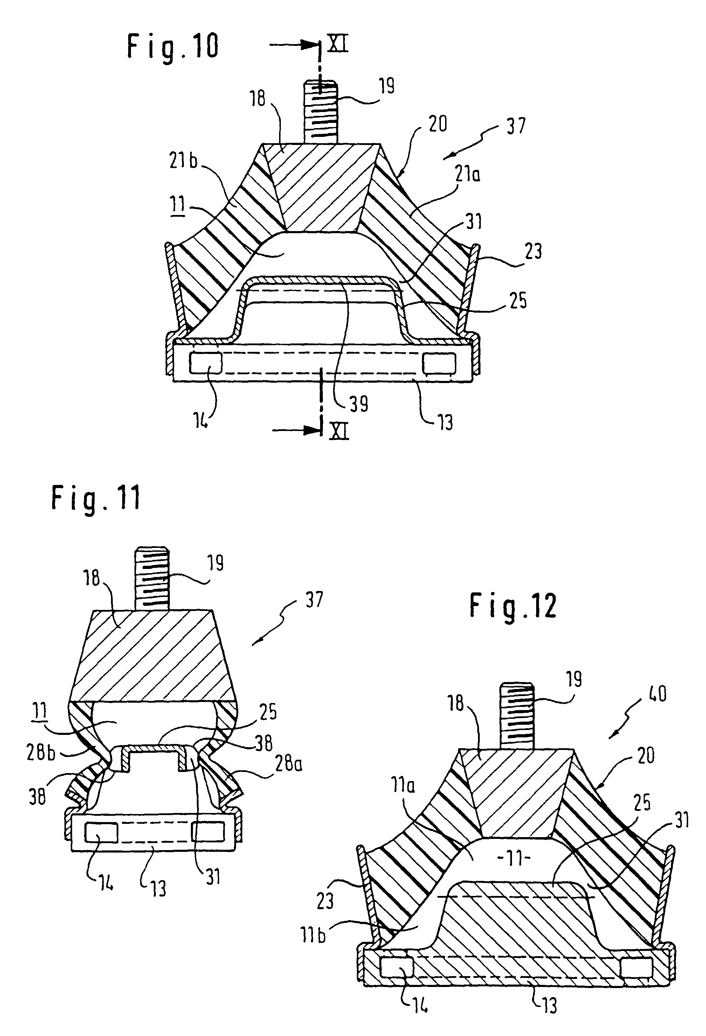

In den Figuren 10 und 11 ist ein weiteres Lager 37 dargestellt, das ebenfalls als Zweikammer-Motorlager ausgebildet ist. Aus Gründen der Vereinfachung wurde auf die Darstellung der unterhalb der Zwischenplatte 13 vorgesehenen Bauteile, insbesondere der Ausgleichskammer, verzichtet. Das Lager 37 weist einen ähnlichen Aufbau wie das Lager 10 gemäß Figur 1 auf. Insbesondere ist die gummielastische Wandung 20 identisch wie beim Lager 10 gemäß Figur 1 ausgebildet. Abweichend von dem Lager 10 gemäß Figur 1 besitzt das Lager 37 einen Panscher 25, der an der Zwischenplatte 13 festgelegt ist. Hierbei erfolgt die Einspannung des Panschers 25 an dessen Randbereich zwischen der Zwischenplatte 13 und dem nach innen eingeschnürten Flanschteil 23. Der Panscher 25 besitzt einen in die Arbeitskammer 11 einragenden Bereich 39, der mit der gummielastischen Wandung 20 einen Spalt 31 begrenzt. An dem nach innen gezogenen Breich 39 des Panschers 25 sind seitlich Wirkflächen 38 vorgesehen, die die Einbeulung der Seitenwände 28a, 28b bei der Einfederung des Lagers begrenzen, so daß ein Spalt 31 auch in diesem Bereich freibleibt.

Bei dem Lager 40 gemäß Figur 12 ist abweichend vom Lager 37 gemäß Figur 10 der Panscher 25 als mit der Zwischenplatte 13 integriertes Bauteil ausgebildet. Hierbei ragt der Panscher 25 von der Oberfläche der Zwischenplatte 13 in die Arbeitskammer 11 ein und begrenzt mit der gummielastischen Wandung 20 einen Spalt 31- Hierbei verbindet der Spalt 31 eine Oberkammer 11a und eine Unterkammer 11b der Arbeitskammer 11.

Allen vorstehend beschriebenen Lagern ist gemeinsam, daß sich die Größe des Panscherspalts 31 in Abhängigkeit von der Einfederung des Lagers verändert. Durch die sich bei allen Ausführungsformen nach innen einbeulenden Seitenwände 28a, 28b tritt hierbei eine erhebliche Veränderung des Querschnitts des Spalts 31 ein. Durch diese Ausgestaltung ist eine Abstimmung des Hydrolagers in weitem Umfang möglich. Neben zwei Kammerlagern kann die Erfindung auch bei Einkammerlagern oder Hydrobuchsen zum Einsatz kommen.

## Patentansprüche

1. Hydraulisch dämpfendes Lager, insbesondere Motorlager für Kraftfahrzeuge, mit einer flüssigkeitsgefüllten Arbeitskammer (11), die von einer gummielastischen, ein Lagerkernteil (18) abstützenden Wandung (20) gebildet ist, und wobei in der Arbeitskammer (11) ein Panscher (25) angeordnet ist, der mit der gummielastischen Wandung (20) einen Spalt (31) begrenzt, dadurch gekennzeichnet, daß die gummielastische Wandung (20) zwei gegenüberliegende, mit Neigung zueinander angeordnete Tragstollen (21a, 21b) aufweist, die zwischen sich das Lagerkernteil (18) aufnehmen, wobei die gummielastische Wandung (20) weiterhin sich gegenüberliegende Seitenwände (28a, 28b) umfaßt, die an dem Lagerkernteil (18) festgelegt sind und sich unter Belastung nach innen ausbeulen.

2. Hydraulisch dämpfendes Lager nach Anspruch 1, dadurch gekennzeichnet, daß die Seitenwände (28a, 28b) im wesentlichen senkrecht ausgerichtet sind und an der Unterseite (27) des Lagerkernteils (18) festgelegt sind.

3. Hydraulisch dämpfendes Lager nach Anspruch 1 oder 2, dadurch gekennzeichnet, daß die Seitenwände (28a, 28b) mit geringerer Volumensteifigkeit als die Tragstollen (21a, 21b) ausgebildet sind.

4. Hydraulisch dämpfendes Lager nach einem der Ansprüche 1 bis 3, dadurch gekennzeichnet, daß die Tragstollen (21a, 21b) zwischen einer Stirnseite (22a, 22b) des Lagerkernteils (18) und einem Flanschteil (23) aufgenommen sind, das von einer die Arbeitskammer (11) begrenzenden Bodenplatte und/oder Zwischenplatte (13) abragt.

5. Hydraulisch dämpfendes Lager nach einem der Ansprüche 1 bis 4, dadurch gekennzeichnet, daß der Panscher (25) mit der gummielastischen Wandung (20) einen umlaufenden Spalt (31) begrenzt.

6. Hydraulisch dämpfendes Lager nach einem der Ansprüche 1 bis 5, dadurch gekennzeichnet, daß der Panscher (25) mit der gummielastischen Wandung (20) einen Spalt (31) begrenzt, der in Umfangsrichtung unterschiedliche Größe aufweist.

7. Hydraulisch dämpfendes Lager nach Anspruch 6, dadurch gekennzeichnet, daß die Größe des Spaltes (31) abhängig von den Abmessungen des Panschers (25) und/oder der Seitenwände (28a, 28b) einstellbar ist.

8. Hydraulisch dämpfendes Lager nach Anspruch 6 oder 7, dadurch gekennzeichnet, daß der Spalt (31) in Umfangsrichtung stellenweise verschlossen ist.

9. Hydraulisch dämpfendes Lager nach einem der Ansprüche 1 bis 8, dadurch gekennzeichnet, daß der Panscher (25) kappenförmig ausgebildet ist und an der Unterseite (27) des Lagerkernteils (18) festgelegt ist.

10. Hydraulisch dämpfendes Lager nach einem der Ansprüche 1 bis 9, dadurch gekennzeichnet, daß der Panscher (25) aus einem elastischen Material hergestellt ist.

11. Hydraulisch dämpfendes Lager nach einem der Ansprüche 1 bis 10, dadurch gekennzeichnet, daß die Tragstollen (21a, 21b) und der Panscher (25) als integriertes Bauteil (33) ausgebildet sind, wobei in dem Bauteil (33) eine Aufnahme für das Lagerkernteil (28) vorgesehen ist.

12. Hydraulisch dämpfendes Lager nach Anspruch 11, dadurch gekennzeichnet, daß der Panscher (25) an die Unterseite (27) des Lagerkernteils (18) angespritzt ist.

13. Hydraulisch dämpfendes Lager nach Anspruch 11 oder 12, dadurch gekennzeichnet, daß der Panscher (25) eine nährungsweise X-förmige Querschnittsform mit einem blockförmigen Basisbereich (25a) und hiervon gespreizt abragenden Panscherbereichen (25b, 25c) aufweist, die eine bogenförmige Außenkontur aufweisen.

14. Hydraulisch dämpfendes Lager nach einem der Ansprüche 1 bis 10, dadurch gekennzeichnet, daß der Panscher (25) eine seitliche kanalförmige Aussparung (36) aufweist, die durch den Panscher (25) und die Seitenwände (28a, 28b) begrenzte Ober- und Unterkammern (11a, 11b) miteinander verbindet.

15. Hydraulisch dämpfendes Lager nach einem der Ansprüche 1 bis 10, dadurch gekennzeichnet, daß der Panscher (25) an eine die Arbeitskammer (11) begrenzende Bodenplatte und/oder Zwischenplatte (13) angeformt ist und in die Arbeitskammer (11) einragt.

16. Hydraulisch dämpfendes Lager nach einem der Ansprüche 1 bis 10, dadurch gekennzeichnet, daß der Panscher (25) als ein separates Bauteil ausgebildet ist, das an einer die Arbeitskammer (11) begrenzenden Bodenplatte und/oder Zwischenplatte (13) festgelegt ist.

## Claims

1. A hydraulic damper mount, more particularly an automotive engine mount, comprising a working chamber (11) filled with fluid and formed by a elastomeric wall (20) supporting a mount core part (18), and said working chamber (11) housing a plunger (25) limiting a gap (31) with said elastomeric wall (20), characterized in that said elastomeric wall (20) comprises two supporting cleats (21a, 21b) opposingly disposed inclined to each other, supporting between them said mount core part (18), said elastomeric wall (20) comprising furthermore opposing side walls (28a, 28b) defined at said mount core part (18) and bulging inwardly under load.

2. The hydraulic damper mount as set forth in claim 1, characterized in that said side walls (28a, 28b) are oriented substantially perpendicular and defined at the underside (27) of said mount core part (18).

3. The hydraulic damper mount as set forth in claim 1 or 2, characterized in that said side walls (28a, 28b) are configured with a resistance to a change in volume less than that of said supporting cleats (21a, 21b).

4. The hydraulic damper mount as set forth in any of the claims 1 to 3, characterized in that said supporting cleats (21a, 21b) are supported between one face of said mount core part (18) and a flanged part (23) protruding from a baseplate and/or intermediate plate (13) defining said working chamber (11).

5. The hydraulic damper mount as set forth in in any of the claims 1 to 4, characterized in that said plunger (25) limits with said elastomeric wall (20) a circumferential gap (31).

6. The hydraulic damper mount as set forth in any of the claims 1 to 5, characterized in that said plunger (25) limits with said elastomeric wall (20) a gap (31) differing in size circumferentially.

7. The hydraulic damper mount as set forth in claim 6, characterized in that the size of said gap (31) is adjustable as a function of the dimensions of said plunger (25) and/or side walls (28a, 28b).

8. The hydraulic damper mount as set forth in claim 6 to 7, characterized in that said gap (31) is closed at some locations circumferentially.

9. The hydraulic damper mount as set forth in any of the claims 1 to 8, characterized in that said plunger (25) is configured cap-shaped and defined at said underside (27) of said mount core part (18).

10. The hydraulic damper mount as set forth in any of the claims 1 to 9, characterized in that said plunger (25) is made of an elastic material.

11. The hydraulic damper mount as set forth in any of the claims 1 to 10, characterized in that said supporting cleats (21a, 21b) and said plunger (25) are configured as an integrated component (33), a support for said mount core part (18) being provided in said component (33).

12. The hydraulic damper mount as set forth in claim 11, characterized in that said plunger (25) is molded to said underside (27) of said mount core part (18).

13. The hydraulic damper mount as set forth in claim 11 or 12, characterized in that said plunger (25) comprises an approximately X-shaped cross-section including a block-shaped base portion (25a) and splayed plunger portions (25b, 25c) protruding therefrom featuring a curved outer contour.

14. The hydraulic damper mount as set forth in any of the claims 1 to 10, characterized in that said plunger (25) comprises a lateral passage-type recess (36) connecting said upper and lower chambers (11a, 11b) to each other limited by said plunger (25) and said side walls (28a, 28b).

15. The hydraulic damper mount as set forth in any of the claims 1 to 10, characterized in that said plunger (25) is molded to a baseplate and/or intermediate plate (13) limiting said working chamber (11) and protrudes into said working chamber (11).

16. The hydraulic damper mount as set forth in any of the claims 1 to 10, characterized in that said plunger (25) is configured as a separate component defined at a baseplate and/or intermediate plate (13) limiting said working chamber (11).

## Revendications

1. Support à amortissement hydraulique, en particulier support de moteur pour véhicule automobile, comprenant une chambre de travail (11) remplie de liquide, laquelle est formée par une paroi (20) présentant l'élasticité du caoutchouc et supportant un noyau de support (18), dans lequel un élément variateur (25) est agencé dans la chambre de travail (11) et délimite une fente (31) avec la paroi (20) présentant l'élasticité du caoutchouc, caractérisé en ce que la paroi (20) présente deux bras porteurs (2 la, 21b) opposés et agencés avec inclinaison l'un par rapport à l'autre et recevant entre eux le noyau de support (18), ladite paroi (20) comportant en outre des parois latérales (28a, 28b) mutuellement opposées, lesquelles sont fixées au noyau de support (18) et se déforment vers l'intérieur sous charge.

2. Support à amortissement hydraulique selon la revendication 1, caractérisé en ce que les parois latérales (28a, 28b) sont orientées sensiblement verticalement et fixées sur la face inférieure (27) du noyau de support (18).

3. Support à amortissement hydraulique selon l'une ou l'autre des revendications 1 et 2, caractérisé en ce que les parois latérales (28a, 28b) sont réalisées avec une rigidité volumique plus faible que les bras porteurs (21a, 21b).

4. Support à amortissement hydraulique selon l'une des revendications 1 à 3, caractérisé en ce que les bras porteurs (2 la, 21b) sont reçus entre une face frontale (22a, 22b) du noyau de support (18) et une partie de bride (23) qui dépasse depuis une plaque de fond et/ou une plaque intermédiaire (13) qui délimite la chambre de travail (11).

5. Support à amortissement hydraulique selon l'une des revendications 1 à 4, caractérisé en ce que l'élément variateur (25) délimite une fente périphérique (31) avec la paroi (20).

6. Support à amortissement hydraulique selon l'une des revendications 1 à 5, caractérisé en ce que l'élément variateur (25) délimite avec la paroi (20) une fente (31) qui présente une taille variable en direction périphérique.

7. Support à amortissement hydraulique selon la revendication 6, caractérisé en ce que la taille de la fente (31) est réglable en fonction des dimensions de l'élément variateur (25) et/ou celles des parois latérales (28a, 28b).

8. Support à amortissement hydraulique selon l'une ou l'autre des revendications 6 et 7, caractérisé en ce que la fente (31) est localement obturée en direction périphérique.

9. Support à amortissement hydraulique selon l'une des revendications 1 à 8, caractérisé en ce que l'élément variateur (25) est réalisé en forme de capuchon, et fixé sur la face inférieure (27) du noyau de support (18).

10. Support à amortissement hydraulique selon l'une des revendications 1 à 9, caractérisé en ce que l'élément variateur (25) est réalisé en matériau élastique.

11. Support à amortissement hydraulique selon l'une des revendications 1 à 10, caractérisé en ce que les bras porteurs (21a, 21b) et l'élément variateur (25) sont réalisés sous la forme d'un composant de structure intégré (33), et en ce qu'il est prévu dans le composant de structure (33) un logement pour le noyau de support (28).

12. Support à amortissement hydraulique selon la revendication 11, caractérisé en ce que l'élément variateur (25) est réalisé par projection sur la face inférieure (27) du noyau de support (18).

13. Support à amortissement hydraulique selon l'une ou l'autre des revendications 11 et 12, caractérisé en ce que l'élément variateur (25) présente en section transversale approximativement une forme en X, avec une zone de base (25a) en forme de bloc, et des secteurs variateurs (25b, 25c) qui se projettent de ladite zone de base en s'écartant et qui présentent un contour extérieur en forme d'arc.

14. Support à amortissement hydraulique selon l'une des revendications 1 à 10, caractérisé en ce que l'élément variateur (25) comporte un évidement latéral (36) en forme de canal, qui relie l'une à l'autre une chambre supérieure et une chambre inférieure (11a, 11b) délimitées par l'élément variateur (25) et par les parois latérales (28 a, 28 b).

15. Support à amortissement hydraulique selon l'une des revendications 1 à 10, caractérisé en ce que l'élément variateur (25) est formé sur une plaque de fond et/ou sur une plaque intermédiaire (13) qui délimite la chambre de travail (11), et en ce qu'il dépasse dans la chambre de travail (11).

16. Support à amortissement hydraulique selon l'une des revendications 1 à 10, caractérisé en ce que l'élément variateur (25) est réalisé sous la forme d'un composant structurel séparé, lequel est fixé sur une plaque de fond et/ou une plaque intermédiaire (13) qui délimite la chambre de travail (11).
